# EUROPÄISCHE PATENTANMELDUNG

(11) **EP 4 821 412 A1**
(43) Veröffentlichungstag der Anmeldung: **14.10.2026**
(21) Anmeldenummer: 26167154.9
(22) Anmeldetag: 24.03.2026
(51) Int. Cl.: A47J 31/46, A47J 31/00, A47J 31/36, A47J 31/60

(54) **VERFAHREN ZUM BETRIEB EINER GETRÄNKEZUBEREITUNGSVORRICHTUNG MIT VERBESSERTEM EXTRAKTIONSVERHALTEN**

(30) Priorität: 08.04.2025 DE 102025113687
(71) Anmelder: Eugster/Frismag AG, 8580 Amriswil (CH)
(72) Erfinder: Wäger, Simon, 8580 Amriswil (CH); Jörg, Stefan, 9113 Degersheim (CH); Koop, Alexander, 78479 Reichenau (DE)
(74) Vertreter: advotec.

(57) **Zusammenfassung**

Verfahren zum Betrieb einer Getränkezubereitungsvorrichtung, wobei in einem Gehäuse eine Antriebseinrichtung angeordnet ist, die eine Brühkammer einer Brüheinheit in unterschiedliche Relativpositionen überführt, wobei in dem Gehäuse zudem eine Fluidpumpe vorgesehen ist, mit der Fluid in einem Fluidsystem der Getränkezubereitungsvorrichtung förderbar ist, wobei die Brüheinheit ferner eine Kupplung aufweist, um eine Antriebsenergie von einem Antrieb der Getränkezubereitungsvorrichtung auf die Antriebseinrichtung zu übertragen, wobei das Fluidsystem mehrere Fluidpfade ausbildet, um aufgebrühtes Getränk von der Brüheinheit an die Getränkezubereitungsvorrichtung zu übertragen und/oder um Fluid als Restfluid oder Spülfluid in eine Fluidauffangvorrichtung der Getränkezubereitungsvorrichtung zu übertragen, mit den nachfolgenden Verfahrensschritten:
- Initiieren eines Brühprozesses einschließlich Befüllen der Brühkammer mit Getränkesubstrat in einer geöffneten Position der Brühkammer;
- Aktivieren des Antriebs und Verfahren der Brühkammer in eine geschlossene Position mittels der Antriebseinrichtung;
- Fördern von Brühfluid mittels der Fluidpumpe in die in der geschlossenen Position befindliche Brühkammer;
- Übertragen von aufgebrühtem Getränk von der Brüheinheit an die Getränkezubereitungsvorrichtung und Leitung zu einem Getränkeauslauf;
wobei vor dem Einleiten von Fluid als Brühfluid in die Brühkammer ein offenes Drainageventil des Fluidsystems eine fluidleitende Verbindung zwischen der Fluidpumpe und der Fluidauffangvorrichtung der Getränkezubereitungsvorrichtung herstellt und die Fluidpumpe aktiviert wird, um Fluid in die Fluidauffangvorrichtung der Getränkezubereitungsvorrichtung zu fördern.

## Beschreibung

Die vorliegende Erfindung betrifft ein Verfahren zum Betrieb einer Getränkezubereitungsvorrichtung gemäß des Oberbegriffs des Anspruchs 1.

Bei gattungsgemäßen Getränkezubereitungsvorrichtungen, insbesondere Kaffee- und/oder Espressovollautomaten, kommen bereits Brüheinheiten in verschiedenen Ausgestaltungen zum Einsatz. Die Brüheinheit übernimmt dabei die Funktion ein Getränkesubstrat, beispielsweise Kaffeebohnenmehl oder Kaffeepulver, in einer ersten Stellung aufzunehmen, beispielsweise an einen Auslass oder Ausgang eines Mahlwerks oder eine Mühle, das Getränkesubstrat zu verdichten, das Getränkesubstrat mit einem Brühfluid zu versetzen oder auszulaugen und im Anschluss an einen Brühvorgang oder zum Abschluss eines Brühvorgangs das aufgebrühte oder ausgelaugte Getränkesubstrat - in diesem Zustand regelmäßig auch als Trester bezeichnet - auszuwerfen.

Im Verlauf des Auslaugens oder Aufbrühens des Getränkesubstrates findet regelmäßig eine Extraktion von Geschmacks- und Farbstoffen sowie weiteren chemischen Bestandteilen des Getränkesubstrats statt, die sich im Brühfluid lösen und/oder suspensieren und die als aufgebrühtes oder ausgelaugtes Getränk von der Brüheinheit und in der Folge auch von der Getränkezubereitungsvorrichtung ausgegeben oder abgegeben werden. Die Abläufe und Reaktionen während der Extraktion haben einen erheblichen Einfluss auf die Güte oder Qualität des erzeugten Getränks.

Bei den bekannten Systemen ist das Extraktionsergebnis stark von der Temperatur des Brühfluids abhängig.

Nachteilig an dem bekannten System ist, dass die Temperatur des Brühfluids zu Beginn des Brühvorgangs oder Brühprozesses zu kalt ist und infolge davon die Extraktion nicht ausreichend stattfinden kann oder das Extraktionsergebnis reduziert wird.

Die Aufgabe der vorliegenden Erfindung ist folglich ein Verfahren zum Betrieb einer Getränkezubereitungsvorrichtung vorzuschlagen, welches es erlaubt qualitativ hochwertigere Getränke zu erzeugen, insbesondere Getränke zu erzeugen, die das Ergebnis eines optimierten Extraktionsvorgangs sind.

Diese Aufgabe wird mit einem Verfahren mit den Merkmalen des Anspruchs 1 gelöst.

Vorteilhafte Ausführungsformen der Erfindung sind Gegenstand der nachfolgenden Beschreibung, Figurenbeschreibung, der Figuren sowie der Unteransprüche.

Auch zur Vermeidung von Wiederholungen sollen nachfolgend alle verfahrensmäßig offenbarten Merkmale auch als entsprechend vorrichtungsmäßig offenbart und beanspruchbar gelten.

Das Verfahren zum Betrieb einer Getränkezubereitungsvorrichtung, insbesondere eines Kaffee- und/oder Espressovollautomaten mit einem Gehäuse, in dem eine, bevorzugt entnehmbare Brüheinheit zum Aufbrühen eines Getränkesubstrats, bevorzugt Kaffeebohnenmehl, angeordnet ist und bei der in dem Gehäuse ferner eine Antriebseinrichtung angeordnet ist, die eine Brühkammer der Brüheinheit in unterschiedliche Relativpositionen überführt, wobei in dem Gehäuse zudem eine Fluidpumpe vorgesehen ist, mit der Fluid in einem Fluidsystem der Getränkezubereitungsvorrichtung förderbar und wobei die Brüheinheit ferner eine, bevorzugt lösbare mechanische, Kopplung aufweist um eine Antriebsenergie von einem Antrieb der Getränkezubereitungsvorrichtung auf die Antriebseinrichtung der Brüheinheit zu übertragen sieht ferner vor, dass das Fluidsystem mehrere Fluidpfade ausbildet, zumindest um fluid als Brühfluid in die Brühkammer zu fördern, um aufgebrühtes Getränk von der Brüheinheit an die Getränkezubereitungsvorrichtung zu übergeben und/oder um Fluid als Restfluid oder Spülfluid in eine Fluidauffangvorrichtung der Getränkezubereitungsvorrichtung zu übertragen umfasst die folgenden Verfahrensschritte:
Initiieren eines Brühprozesses einschließlich Befüllen der Brühkammer mit Getränkesubstrat in einer geöffneten Position der Brühkammer.

Aktivieren des Antriebs und Verfahren der Brühkammer mittels der Antriebseinrichtung in eine geschlossene Position.

Fördern von Brühfluid mittels der Fluidpumpe in die in der geschlossenen Position befindliche Brühkammer.

Übertragen von aufgebrühtem Getränk von der Brüheinheit an die Getränkezubereitungsvorrichtung und Leitung zu einem Getränkeauslauf.

Erfindungsgemäß ist dabei vorgesehen, dass vor dem Einleiten von Fluid als Brühfluid in die Brühkammer ein offenes Drainageventil des Fluidsystems eine fluidleitende Verbindung zwischen der Fluidpumpe und der Fluidauffangvorrichtung mit der Getränkezubereitungsvorrichtung herstellt und die Fluidpumpe aktiviert wird, um Fluid in die Fluidauffangvorrichtung der Getränkezubereitungsvorrichtung zu fördern.

Der Grundgedanke der Erfindung besteht in der Erkenntnis, dass gerade zu Beginn des Brühprozesses regelmäßig Brühfluid mit einer zu geringen Temperatur in die Brühkammer eingeführt wird.

Die Erfindung hat ferner erkannt, dass bei verschiedenen Brüheinheiten und Getränkezubereitungsvorrichtungen bereits eine Drainageleitung und ein dazugehöriges Drainageventil vorgesehen oder realisiert ist, welche in der Vergangenheit jedoch nur dazu genutzt wurden, um im Anschluss an einen Brühprozess in der Brühkammer verbleibendes Restfluid zu drainagieren, insbesondere um das Getränkesubstrat oder den Trester möglichst trocken oder mit möglichst geringerer Restfeuchte aus der Brühkammer zu entfernen.

In diesem Zusammenhang hat die Erfindung erkannt, dass es möglich ist ein entsprechendes Drainageventil und die dazugehörige Fluidleitung zu der Fluidauffangvorrichtung auch schon zu Beginn oder vor dem eigentlichen Brüh- oder Auslaugprozess zu nutzten, um anfänglich zu kaltes oder zu wenig erwärmtes Brühfluid zunächst nicht in die Brühkammer zu leiten, sondern stattdessen über das Drainageventil in die Fluidauffangvorrichtung zu überführen oder zu pumpen.

Dadurch kann erreicht werden, dass auch schon zu Beginn des Brühprozesses Brühfluid mit einer auseichenden Temperatur, insbesondere Brühfluid mit einer Temperatur von über 90°C zur Verfügung steht.

Damit kann der komplette Brühprozess mit Brühfluid mit möglichst konstanter Temperatur, bevorzugt von über 90°C, durchgeführt werden, um möglichst gute Extraktionsergebnisse zu erhalten.

Die vorliegende Erfindung kann z.B. aber keinesfalls ausschließlich mit einer Brüheinheit und/oder einer Getränkezubereitungsvorrichtung ausgeführt werden, wie sie in der Patentanmeldung DE 10 2021 006 394 A1 der Anmelderin beschrieben und offenbart ist. Die Offenbarung der besagten Voranmeldung wird dementsprechend vollständig durch Verweis in die vorliegende Anmeldung mit aufgenommen.

In einer ersten vorteilhaften Ausgestaltung des Verfahrens kann vorgesehen sein, dass das Drainageventil solange geöffnet bleibt und die Fluidpumpe vor dem Einleiten von Fluid als Brühfluid in die Brühkammer solange aktiviert bleibt, bis zumindest ein Volumen von Fluid oder Brühfluid in die Fluidauffangvorrichtung gefördert wird, welches einem Leitungsvolumen des Fluidsystems zwischen einer Heizeinrichtung und dem Drainageventil entspricht. Besonders bevorzugt kann vorgesehen sein, dass nicht nur um das Volumen, welches einem direkten Leitungsvolumen des Fluidsystems zwischen der Heizeinrichtung und dem Drainageventil entspricht gefördert oder verdrängt wird, sondern dass auch ein Volumen eines größeres Leitungsvolumens gefördert und/oder verdrängt wird, welches Umwege oder Abzweigungen im Fluidsystem miteinschließt. Denn es kann auch möglich sein, dass das Brühfluid bei unterschiedlichen Getränken oder Brühprozessen unterschiedliche Pfade des Fluidsystems durchfließt, um zur Brühkammer oder in die Brühkammer zu gelangen.

Besonders vorteilhaft kann vorgesehen sein, dass das abhängig von dem Brühprozess und dem daraus resultierenden Fluidpfad des Brühfluids entlang des Fluidsystems das Drainageventil solange geöffnet bleibt und die Fluidpumpe vor dem Einleiten von Fluid als Brühfluid in die Brühkammer solange aktiviert bleibt, bis zumindest ein Volumen von Fluid oder Brühfluid in die Fluidauffangvorrichtung gefördert wird, welches dem Leitungsvolumen des jeweiligen Fluidpfad des Fluidsystems zwischen Heizeinrichtung und Drainageventil entspricht.

In einer weiteren Ausgestaltung des Verfahrens kann vorgesehen sein, dass vor dem Einleiten von Fluid als Brühfluid in die Brühkammer ein Fluidvolumen zwischen 5ml und 20ml in die Fluidauffangvorrichtung gefördert wird. Es hat sich herausgestellt, dass ein Volumen zwischen 5ml und 20ml regelmäßig bereits ausreichend ist, um sicherzustellen, dass das nachfolgende und als Brühfluid in die Brühkammer eingeleitete Fluid eine ausreichende oder ausreichend hohe Temperatur, bevorzugt über 90°C, aufweist.

Als Heizeinrichtung kann beispielsweise ein Thermoblock zum Einsatz kommen, der als Durchlauferhitzer Fluid, insbesondere Brühfluid erwärmt. Die Heizeinrichtung ist bevorzugt in die Getränkezubereitungsvorrichtung fest integriert und Teil des Fluidsystems, also fluidleitend mit dem Fluidsystem verbunden, und/oder in einem Gehäuse der Getränkezubereitungsvorrichtung angeordnet. Die Öffnung des Drainageventils bis ein entsprechendes Leitungsvolumen des Fluidsystems zwischen Heizeinrichtung und Drainageventil gefördert wurde, führt vorteilhaft dazu, dass nach dem Schließen des Drainageventils und dem Einleiten von Brühfluid in die Brühkammer vorteilhaft nur solches Brühfluid in die Brühkammer gelangt, welches zeitlich unmittelbar vor der Einleitung in die Brühkammer die Heizeinrichtung passiert hat und dementsprechend zeitlich unmittelbar zuvor erwärmt oder erhitzt wurde.

Eine weitere Ausgestaltung des Verfahrens kann vorsehen, dass bei geöffnetem Drainageventil die Fluidpumpe aktiviert wird, während die Brühkammer in die geschlossene Position überführt wird und/oder während das Getränkesubstrat in der geschlossenen Position der Brühkammer verdichtet wird. Dadurch kann in vorteilhafter Weise erreicht werden, dass durch das Überführen von Fluid in die Fluidauffangvorrichtung vor Beginn der Einleitung von Brühfluid in die Brühkammer der Brühprozess nicht verlängert wird. Dementsprechend kann ein Getränk mit verbesserten Extraktionseigenschaften hergestellt werden, ohne dass dafür zusätzliche Zeit benötigt wird oder der Brühprozess insgesamt verlängert wird.

In einer weiteren vorteilhaften Ausgestaltung des Verfahrens kann vorgesehen sein, dass alle Verfahrensschritte nach dem Initiieren des Brühvorgangs automatisch ablaufen und insbesondere keine zusätzliche Benutzerinteraktion stattfindet. Bevorzugt können auch weitere Verfahrensschritte, beispielsweise das Auspressen des Getränkesubstrats oder Tresters nach Abschluss des Brühprozesses, das erneute Öffnen des Drainageventils zum Entwässern oder Entfeuchten der Brühkammer und/oder das Auswerfen des Tresters aus der Brühkammer sowie das Zurückverstellen oder Zurückfahren der Brühkammer der Brüheinheit in eine offene Position oder Ausgangsposition als Teil eines automatisierten Brühprozesses durchgeführt werden.

Eine weitere, besonders wünschenswerte Variante des Verfahrens kann vorsehen, dass das Drainageventil ohne äußere Einflüsse in einer Öffnungsstellung verharrt und nur durch eine äußere Kraftbeaufschlagung, bevorzugt über eine Bewegung der Verstelleinrichtung der Brüheinheit in einer Verschlussstellung überführt wird. Mit anderen Worten ausgedrückt kann das Drainageventil als "normally open" ausgebildet sein. Dadurch kann vorteilhaft erreicht werden, dass zu unterschiedlichen Zeitpunkten im Brühprozess eine Fluidleitung durch das Drainageventil und zur Fluidauffangvorrichtung gewährleistet wird. Besonders vorteilhaft wird das Drainageventil lediglich geschlossen, während Brühfluid in die Brühkammer der Brüheinheit gepumpt wird.

In einer weiteren, besonders bevorzugten Variante des Verfahrens kann vorgesehen sein, dass bei geöffnetem Drainageventil gleichzeitig auch ein Fluidpfad zwischen Drainageventil und Brühkammer besteht und die Aktivierung der Fluidpumpe dennoch eine Förderung von Fluid in die Fluidauffangrichtung der Getränkezubereitungsvorrichtung bewirkt. Das bedeutet, dass zusätzlich zu dem Fluidpfad durch das Drainageventil zu der Fluidauffangvorrichtung auf Grund der Öffnung des Drainageventils auch ein Fluidpfad zwischen Drainageventil und Brühkammer besteht. Das Fluid, welches in dieser Situation gefördert wird, hat also grundsätzlich zwei Möglichkeiten zum Abfließen nach oder bei dem Passieren des Drainageventils. Es hat sich überraschend gezeigt, dass bei einem Aktivieren der Fluidpumpe bei gleichzeitiger Öffnung oder Offenhalten des Drainageventils ein Fluidpfad von dem Drainageventil oder über das Drainageventil zur Brühkammer unschädlich ist und Fluid dennoch zunächst in die Fluidauffangvorrichtung gefördert wird und nicht in die Brühkammer eingeleitet wird. Dies erleichtert in vorteilhafter Weise die Steuerung der beteiligten Ventile, da bei offenem Drainageventil zum Abführen von zu kaltem oder zu wenig erwärmtem Fluid nicht darauf geachtet werden muss und keine Steuerung vorgesehen sein muss, die dazu führt, dass ein Fluidpfad zwischen Drainageventil und Brühkammer unterbrochen wird.

In einer weiteren Ausgestaltung des Verfahrens kann als zusätzlicher Verfahrensschritt vorgesehen sein, dass nach dem Übertragen von aufgebrühtem Getränk von der Brüheinheit an die Getränkezubereitungsvorrichtung und Leitung des Getränks zu einem Getränkeauslauf das Drainageventil erneut in die Öffnungsstellung überführt wird und eine fluidleitende Verbindung mit der Brühkammer hergestellt wird, sodass in der Brühkammer befindliches Restfluid in die Fluidauffangvorrichtung der Getränkezubereitungsvorrichtung abfließt oder gefördert wird. Das Abfließen oder Fördern kann vorteilhaft durch eine mechanische Kompression des Getränkesubstrats oder Tresters in der Brühkammer befördert werden.

Eine weitere, besonders vorteilhafte Variante des Verfahrens kann vorsehen, dass zum Fördern von Brühfluid mittels der Fluidpumpe in die in der geschlossenen Position befindliche Brühkammer das Drainageventil in eine Verschlussstellung überführt wird. Dabei kann vorgesehen sein, dass über die Antriebseinrichtung der Brüheinheit, die wiederum vom Antrieb der Getränkezubereitungsvorrichtung angetrieben wird, eine mechanische Aktivierung des Drainageventils stattfindet, die dazu führt, dass das Drainageventil auf seiner normalerweise geöffneten Position in eine zwangsgeschlossene Position überführt wird.

Das erfindungsgemäße Verfahren wird nachfolgend anhand von beispielhaften, lediglich schematischen Zeichnungen verdeutlicht und erläutert. Darin zeigen:
- Fig. 1:: eine Schnittdarstellung durch eine Getränkezubereitungsvorrichtung;
- Fig. 2:: eine perspektivische Darstellung einer alternativen Brüheinheit zur Ausführung des erfindungsgemäßen Verfahrens;
- Fig. 3:: eine perspektivische Ansicht einer kombinierten Drainage- und Zuflussbaugruppe gemäß der Ausführungsform der Fig. 2 in einer ansonsten von der Brüheinheit losgelösten Einzeldarstellung;
- Fig. 4a bis Fig. 4c:: ein Fluidschema einer kombinierten Drainage- und Zuflussbaugruppe in verschiedenen Stellungen oder Positionen des Drainageventils und des Brühkammerventils;
- Fig. 5a bis Fig. 5c:: eine schematische Darstellung von möglichen Fluidflüssen durch eine kombinierte Drainage- und Zuflussbaugruppe in Übereinstimmung mit dem Fluidschema der Fig. 4a bis 4c;
- Fig. 6a bis Fig. 6c:: Schnittdarstellungen durch ein Drainageventil in Übereinstimmung mit den Situationen der Fig. 4a bis 4c und 5a bis 5c;
- Fig. 7a bis Fig. 7c:: schematische Perspektivdarstellungen zur Veranschaulichung von einem Drainageventil;
- Fig. 8a bis Fig. 8c:: vergrößerte Ausschnitte der Schnittdarstellung des Drainageventils gemäß Fig. 6a bis 6c;
- Fig. 9a bis Fig. 9c:: schematische Schnittdarstellungen durch eine Brüheinheit zur Veranschaulichung einer Funktion eines Brühkammerventils;
- Fig. 10a bis Fig. 10c:: vergrößerte Ausschnitte der Schnittdarstellungen gemäß Fig. 9a bis 9c.

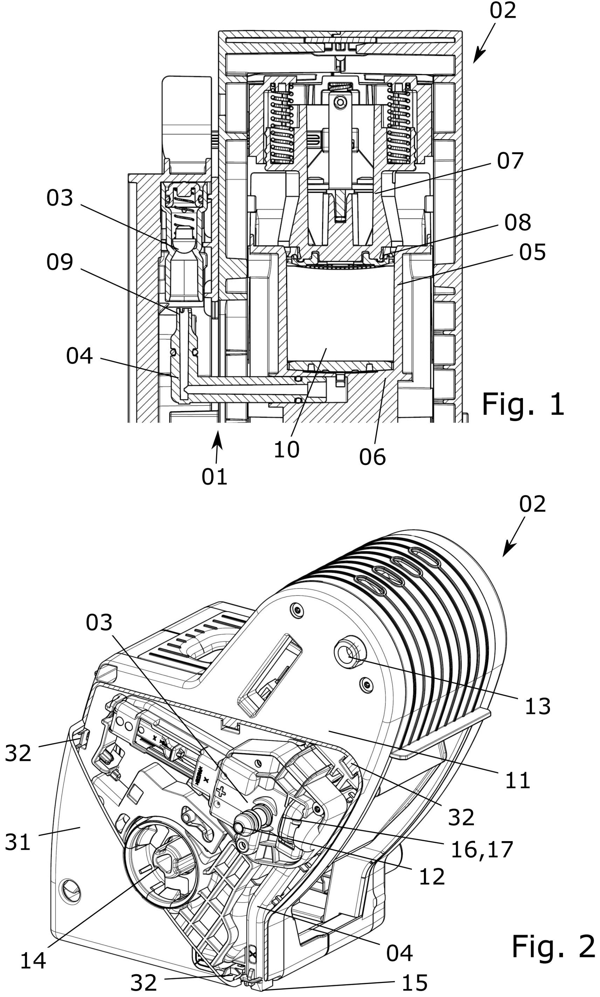

Fig. 1 zeigt einen Schnitt durch eine bekannte Getränkezubereitungsvorrichtung 01 aus dem Stand der Technik. Die Getränkezubereitungsvorrichtung 01 verfügt über eine entnehmbare Brüheinheit 02. In der Darstellung der Fig. 1 ist die Brüheinheit 02 in die Getränkezubereitungsvorrichtung 01 eingesetzt. Vorrichtungsseitig ist ein Drainageventil 03 vorgesehen, welches bei der Entnahme der Brüheinheit 02 in der Getränkezubereitungsvorrichtung 01 verbleibt. Das Drainageventil 03 ist ortsfest oder unbeweglich in der Getränkezubereitungsvorrichtung 01 angeordnet.

Das Drainageventil 03 kann mit einer Restfluidableitung 04 der Brüheinheit 02 verbunden oder mechanisch gekuppelt werden, wobei der Kupplungszustand der Restfluidableitung 04 vom Bewegungszustand oder von der Relativposition der Brühkammer 05 innerhalb der Brüheinheit 02 abhängt. Im Beispiels der Fig. 1 lässt sich erkennen, dass die Restfluidableitung 04 noch nicht mit dem Drainageventil 03 verbunden oder gekoppelt ist, sondern dass stattdessen ein Abstand und damit eine Entkupplung vorherrschen. Bei einer weiteren Bewegung des unteren, beweglichen Brühkammerteils 06 auf das obere, statische, den Brühkopf 08 aufweisende, Brühkammerteil 07 zu, wird auch die Restfluidableitung 04 und deren, dem Drainageventil 03 zugewandtes Ende weiter auf das Drainageventil 03 zubewegt, bis eine Kopplung hergestellt wird. In diesem Zustand, der beispielsweise erreicht wird, bevor ein Brühprozess initiiert wird und der aufrechterhalten wird, bis der Brühprozess oder Brühvorgang abgeschlossen ist, kann dann, bevorzugt nach dem Durchführen des Brühvorgangs eine Drainage der Brühkammer 05 über die Restfluidableitung 04 und das dann geöffnete Drainageventil 03 stattfinden.

In einem Zustand, der dem Zustand der Fig. 1 entspricht und der vorherrscht, wenn die Brühkammer 05 gerade verschlossen und/oder das in der Brühkammer 05 eingefüllte Getränkesubstrat verdichtet oder getampert wird, kann ein ungewolltes, unkontrolliertes und unbeabsichtigtes Austreten von Restfluid aus der Restfluidableitung 04 erfolgen, was durch entsprechende Pfeildarstellungen 09 in der Fig. 1 veranschaulicht ist. Anhand der Pfeildarstellungen 09 kann auch nachvollzogen werden, dass dieses unkontrollierte Ableiten von Restfluid daraus resultiert, dass einerseits die Restwasserableitung 04 eine gewisse Siphonwirkung oder Siphonfunktionalität aufweist, in der schwerkraftbedingt Restfluid nicht vollständig entleert wird und gleichzeitig beim Schließen der Brühkammer oder beim Verkleinern des Brühraums 10 innerhalb der Brühkammer 05 die Verdrängung der dort befindlichen Medien, insbesondere Luft, zwangsläufig oder zumindest hochwahrscheinlich über die Restfluidableitung 04 erfolgt, weil in aller Regel der Brühkopf 08 gegenüber der Brühkammer des Brühkammerteils 06 abgedichtet ist. Dies oder der dadurch resultierende Druck oder Überdruck führt dann zum Austreiben oder Ableiten des Restfluids, bevor die Kopplung zwischen Restfluidableitung 04 und Drainageventil 03 zustande gekommen ist oder hergestellt ist.

Sofern das Drainageventil 03 unabhängig von der Restwasserableitung 04 mit einem Fluidzufluss oder Brühfluidzufluss und mit und einer Fluidauffangvorrichtung eine Fluidverbindung herstellen kann - in der Fig. 1 nicht im Detail dargestellt, kann auch die Getränkezubereitungsvorrichtung 01 sowie die Brüheinheit 02 der Fig. 1 für das erfindungsgemäße Verfahren verwendet werden. Im Detail wird das erfindungsgemäße Verfahren nachfolgend anhand der weiteren Figuren beschreiben.

Die Erfindung ist deutlicher anhand einer vorteilhaften Brüheinheit 02 in der Fig. 2 dargestellt. Die nachfolgend beschriebene Brüheinheit eignet sich zum Ausführen des erfindungsgemäßen Verfahren auch wenn gewissen Teile nicht zwingend erforderlich sind.

Die Brüheinheit umfasst ein Gehäuse 11, einen Fluidzufluss 12 für Brühfluid und gegebenenfalls weitere Fluide, wie beispielsweise Spülfluid, Entkalkungsfluid oder Reinigungsfluid. Weiterhin umfasst die Brüheinheit 02 einen Fluidauslass 13 um aufgebrühtes Getränk an die Getränkezubereitungsvorrichtung abzugeben oder zu übertragen. Die Brüheinheit 01 weist weiterhin eine mechanische Kupplung 14 auf, mit der Antriebsenergie von einem Antrieb der Getränkezubereitungsvorrichtung auf eine nicht im Detail dargestellte im Inneren des Gehäuses 11 angeordnete Antriebs- oder Verstelleinrichtung übertragen werden kann.

Beispielsweise und bevorzugt aber keinesfalls ausschließlich, kann die Antriebs- oder Verstelleinrichtung als Kurbelwelleneinheit und/oder Kniehebeleinheit ausgebildet sein, die so mit der Brühkammer, insbesondere einem beweglichen Brühkammerteil zusammenwirkend ausgebildet ist, dass die Brühkammerhälfte verschwenkt und linear verstellt werden kann, wobei die Verschwenkung im Wesentlichen genutzt wird, um Getränkesubstrat in die Brühkammer einzufüllen und Getränkesubstratreste oder Trester aus der Brühkammer abzuführen, und wohingegen die Translation oder Verschiebung des beweglichen Brühkammerteils dafür genutzt wird, um vor und nach dem eigentlichen Brühprozess oder Aufbrühen einen beweglichen Brühkammerteil auf einen anderen Brühkammerteil zu und von diesem weg zu verstellen, um die Brühkammer zu schließen, dass Getränkesubstrat zu verdichten und/oder ein Außendruck auf die Brühkammerteile vor, während und/oder nach dem eigentlichen Brühen zu erzeugen und/oder aufrechtzuerhalten.

Die Brüheinheit 02 umfasst ferner ein Drainageventil 03. Das Drainageventil 03 ist wie im Weiteren noch im Detail beschrieben und gezeigt werden wird, ununterbrechbar fluidleitend mit einer in Flussrichtung des Restfluids dem Drainageventil 03 nachgeordneter Restfluidableitung 04 verbunden. Die Restfluidableitung 04 umfasst einen ausgangsseitiges oder dem Drainageventil 03 gegenüberliegendes Ende 15, welches so angeordnet und ausgebildet ist, dass die Ableitung von Restfluid in eine Fluidauffangrichtung der Getränkezubereitungsvorrichtung sichergestellt ist. In der Fig. 2 ist weder die Getränkezubereitungsvorrichtung noch die Fluidauffangvorrichtung dargestellt. Es ist aber ohne weiteres erkennbar, dass ein direkt unter der Brüheinheit 02, insbesondere mit einer Öffnung im Bereich des Endes 15 der Restfluidableitung 04 angeordnete Fluidauffangvorrichtung einer Getränkezubereitungsvorrichtung ohne weiteres ein aus dem Ende 15 austretendes Restfluid aufnehmen oder empfangen könnte.

Im Beispiel der Fig. 2 ist das Drainageventil als Teil einer kombinierten Drainage- und Zuflussbaugruppe 16 realisiert. Diese kann vorteilhaft hinter einer Abdeckung 31 angeordnet sein. In der Fig. 2 ist aus Gründen der Darstellbarkeit die Abdeckung 31 teilweise "entfernt" oder nicht dargestellt. Der Fluidzufluss 12 ist dabei bevorzugt so ausgebildet, dass er über die Abdeckung 31 herausragt. Die Drainage- und Zuflussbaugruppe 16 kann an einem Teil des Gehäuses 11 angeordnet oder festgelegt sein. Die Abdeckung 31 kann über Rastmittel 32 auf das Gehäuse 11 aufsteckbar sein und die Drainage- und Zuflussbaugruppe 16 abdecken. Alternativ kann die Drainage- und Zuflussbaugruppe 16 auch innerhalb des Gehäuses angeordnet sein. Dann kann bevorzugt die Abdeckung 31 einen Teil des Gehäuses 11 ausbilden. Durch die Abdeckung 31 kann die Drainage- und Zuflussbaugruppe 16 gut vor Stößen und andern mechanischen Einwirkungen geschützt werden.

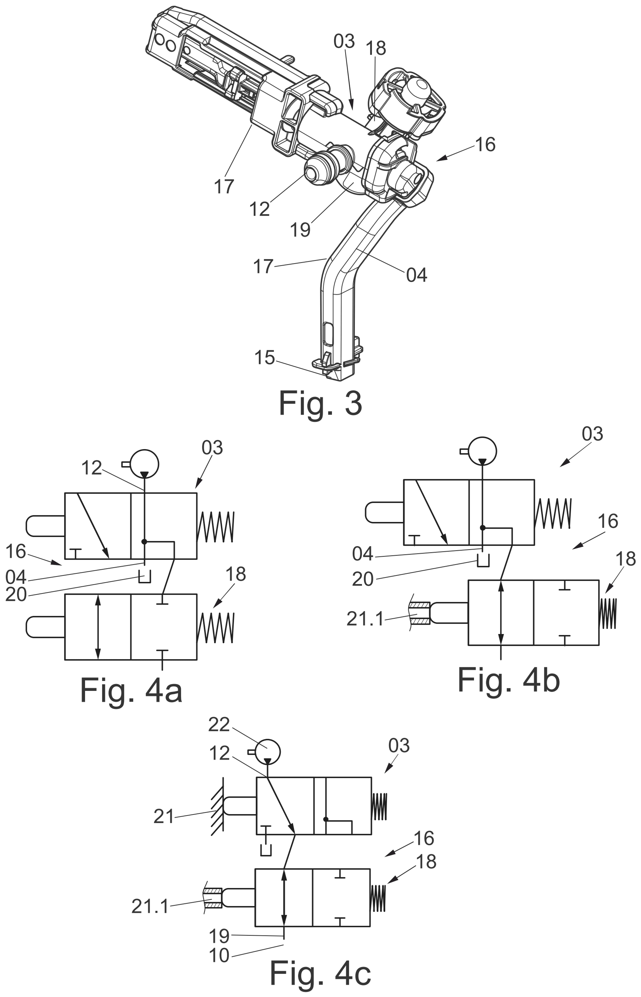

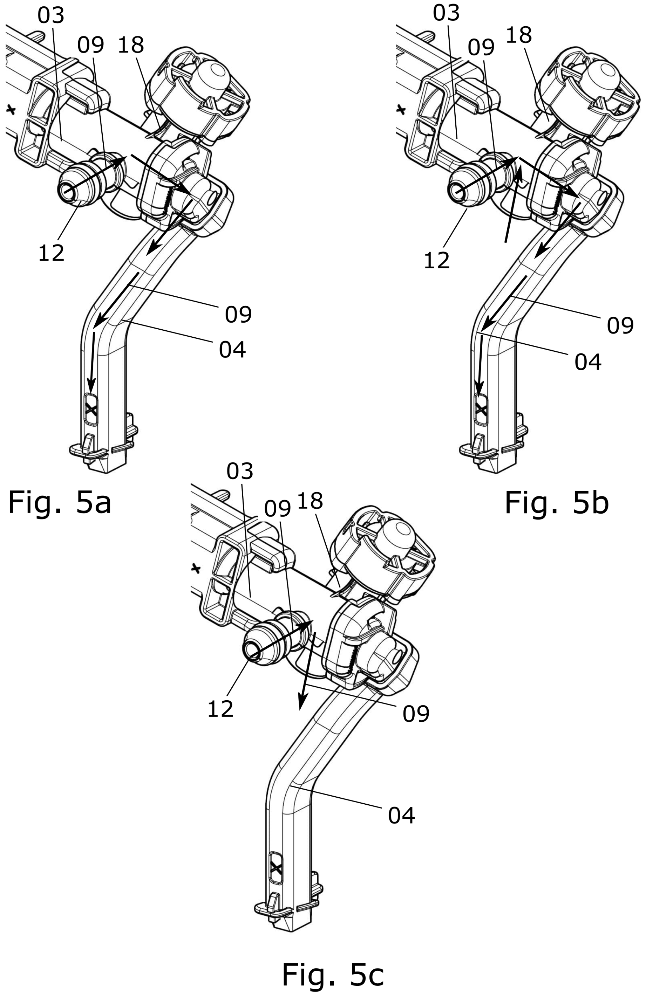

Die Fig. 3 zeigt eine kombinierte Drainage- und Zuflussbaugruppe 16, die neben der Drainagebaugruppe 17 umfassend das Drainageventil 03 und die Restfluidableitung 04 auch ein Brühkammerventil 18 umfasst. Dabei ist zunächst erkennbar, dass Fluidzufluss 12 das Drainageventil 03 passiert oder das Drainageventil 03 kreuzt, bevor Fluid, insbesondere Brühfluid in die Brühkammer oder zu dem Brühkammerventil 18 gelangt oder gelangen kann. Weiterhin ist bereits angedeutet oder erkennbar, dass eine fluidleitende Verbindung von dem Fluidzufluss 12 zu der Restfluidableitung 04 bestehen kann oder hergestellt werden kann, je nachdem in welcher Position oder in welchem Zustand sich das Drainageventil 03 befindet, was anhand der Figuren 5 bis 8 noch eingehend erläutert werden wird. Damit kann auch vor dem Einleiten von Brühfluid in die Brühkammer 05 bereits eine Förderung von Fluid von dem Fluidzufluss12 über das Drainageventil 03 in die Restfluidableitung 04 und von dort in die nicht dargestellte Fluidauffangvorrichtung erfolgen. Das Brühkammerventil 18 weist auf einer Seite einen Ausgang 19 auf, der fluidleitend mit der Brühkammer verbunden ist.

In den Fig. 4a - 4c werden Fluidschema der kombinierten Drainage- und Zuflussbaugruppe 16 in unterschiedlichen Positionen oder Öffnungs- oder Verschlusspositionen der Ventile 03, 18 veranschaulicht.

Fig. 4a zeigt das Drainageventil 03 und das Brühkammerventil 18 in einem Fluidschema in geöffneten Stellung des Drainageventils 03 besteht eine Fluidverbindung oder eine geöffnete Fluidverbindung von einem Fluidzufluss 12 zu einem Restfluidablauf 04 und weiter zu einer Fluidauffangvorrichtung 20. Dadurch kann Fluid von bevorzugt 5ml bis 20ml vom Fluidzufluss 12 in die Fluidauffangvorrichtung 20 gefördert werden, bevor Fluid als Brühfluid in die Brühkammer gefördert wird. Damit wird eine hohe Extraktionsrate sichergestellt.

Weiter besteht eine Fluidverbindung bis zu dem Brühkammerventil 18, welches jedoch in einer normalerweise geschlossenen Position angeordnet ist und dementsprechend keine Fluidleitung bis zur Brühkammer oder bis zum Ausgang 19 ermöglicht. Auch umgekehrt kann kein Restfluid von der Brühkammer kommend das Brühkammerventil 18 überwinden, so dass eine Drainage aus der Brühkammer in den Restfluidablauf 04 in der dargestellten Schaltungsposition nicht möglich ist. Die in der Fig. 4a dargestellte fluidtechnische Situation entspricht einer Initialposition oder Grundposition, die eingenommen wird, wenn die Brühkammer der Brüheinheit in eine Mahlposition überführt ist oder aus der Mahlposition heraus verschwenkt wird. In der Darstellung der Fig. 1 ist das Drainageventil geöffnet und das Brühkammerventil 18 geschlossen.

In der Fig. 4b ist eine fluidtechnische Situation dargestellt, die eine Drainage der Brühkammer ermöglicht und ebenfalls ermöglicht, dass Fluid vom Fluidzufluss 12 in die Fluidauffangvorrichtung 20 gefördert wird, ohne dass das Fluid in die Brühkammer 05 gelangt. Damit wird diese Stellung bevorzugt eingenommen, wenn vor dem Einleiten von Fluid als Brühfluid in die Brühkammer zu gering erwärmtes Fluid in die Fluidauffangvorrichtung überführt werden soll oder wenn nach und gegebenenfalls auch vor einem tatsächlichen Brühvorgang eine Drainage der Brühkammer erreicht werden soll, indem Restfluid aus der Brühkammer durch das Brühkammerventil 18 und das Drainageventil 03 über die Restfluidableitung 04 in die Fluidauffangvorrichtung 20 abgeführt werden soll. Der entsprechende Fluidfluss oder Fluidkanal ist der Fig. 4b zu entnehmen. Weiterhin ist erkennbar, dass das Brühkammerventil 18 aus der normalerweise geschlossenen Position in eine zwangsgeöffnete Position überführt wurde. Sehr schematisch sind in der Fig. 4b auch schon die mechanischen Betätigungselemente 21.1 dargestellt, die die Öffnung des Brühkammerventils 18 verursachen und mit der Antriebs- oder Verstelleinrichtung der Brüheinheit mittelbar oder unmittelbar verstellt oder gesteuert werden.

In der Fig. 4c ist eine Situation dargestellt, in der das normalerweise geöffnete Drainageventil 03 durch weitere Betätigungselemente 21, die mit der Antriebs- und Verstelleinrichtung gesteuert, angetrieben oder bewegt werden, in eine geschlossene Stellung oder eine Verschlussstellung überführt wurde. In der so dargestellten Situation kann von einem Fluidzufluss 12 Fluid, insbesondere Brühfluid, von der Fluidpumpe 22 durch das Drainageventil 03 und das Brühkammerventil 18 in die Brühkammer 10 gelangen. Das Brühkammerventil 18 ist wie bereits in Fig. 4b zwangsgeöffnet. Dementsprechend handelt es sich bei der Stellung oder bei den Stellungen der Fig. 4c um die Brühposition der Drainage- und Zuflussbaugruppe 16 sowie des Drainageventils 03 und des Brühkammerventils 18.

In der vorliegenden Erfindung kann in dem Zustand der Fig. 4a von der Fluidpumpe 22 Fluid gefördert werden, welches aufgrund des geschlossenen Brühkammerventils 18 nicht in die Brühkammer gelangen kann. In dieser Position des Drainageventils 03 kann vor Einleitung von Brühfluid in die Brühkammer die Fluidpumpe 22 aktiviert werden und Fluid in den Fluidauffangvorrichtungen 20 gefördert werden. Das Volumen entspricht vorteilhaft dem Leitungsvolumen zwischen einer nicht dargestellten Heizeinrichtung und dem Drainageventil 03. Im Anschluss kann die Schaltung oder Stellung der Fig. 4c hergestellt werden, in der dann das nachfolgende, ausreichend heiße oder stark genug erwärmte Brühfluid in die Brühkammer eingeführt und eine optimierte Extraktion durchgeführt wird.

Das Fördern von Fluid in die Fluidauffangvorrichtung 20 vor dem Einleiten von Fluid als Brühfluid in die Brühkammer kann in einer alternativen Ausführungsform auch in der Position oder Stellung der Fig. 4b erfolgen. Es hat sich herausgestellt, dass beim Aktivieren der Fluidpumpe 22 in dieser Stellung beim Aktivieren der Fluidpumpe 22 das Fluid zunächst in die Fluidauffangvorrichtung 20 gefördert wird und nicht in die Brühkammer gelangt, obwohl das Brühkammerventil 18 bereits geöffnet ist. Dies bedeutet auch, dass das Ableiten von Fluid in die Fluidauffangvorrichtung stattfinden kann, während die Brüheinheit verstellt wird und zwischen den Positionen verstellt wird, die zu den Zuständen der Fig. 4a und 4b führen.

Die vorliegende Erfindung ist nicht auf die vorangehenden Ausführungsformen der Getränkezubereitungsvorrichtung beschränkt. Gerade das Drainageventil 03 kann auch in einer anderen Ausführungsform vorgesehen sein. Wichtig ist nur, dass das Drainageventil 03 so ausgestaltet ist, dass vor dem Einfüllen von Fluid als Brühfluid in die Brühkammer die Fluidpumpe 22 in der Lage ist Fluid in die Fluidauffangvorrichtung 20 zu fördern und eine dazugehörige Fluidverbindung bereitzustellen.

Anhand der perspektivischen Darstellungen der Fig. 5a bis 5c sind die möglichen Fluidflüsse durch ein kombiniertes Drainage- und Zuflussbauteil oder eine kombinierte Drainage- und Zuflussbaugruppe 16 anhand von Pfeilskizzen nochmals verdeutlicht. In allen drei Fällen oder in allen drei Darstellungen wird jeweils Fluid über den Fluidzufluss 12 zugeführt, was anhand eines entsprechenden Pfeils symbolisiert wird. In der Darstellung der Fig. 5a kann, entsprechend der Schaltungssituation gemäß Fig. 4a, durch das geöffnete Drainageventil 03 das Fluid passieren und kann von dem Drainageventil 03 in die Restfluidableitung 04 gelangen, was ebenfalls anhand entsprechender Pfeile 09 dargestellt ist. Über das geschlossene Brühkammerventil 18 kann hingegen kein Fluid aus der Brühkammer austreten und in die Restfluidableitung 04 gelangen.

In der Drainageposition gemäß Fig. 5b, die dem Schaltungszustand der Fig. 4b entspricht, in der das normalerweise geschlossene Brühkammerventil 18 geöffnet ist kann, wie anhand der Pfeildarstellungen verdeutlicht wird sowohl Fluid vom Fluidzufluss 12 durch das Drainageventil zu der Restfluidableitung 04 als auch von der Brühkammer über das Brühkammerventil 18 in die Restfluidableitung 04 gelangen.

In der Darstellung der Fig. 5c ist erkennbar, dass Fluid, insbesondere Brühfluid über den Fluidzufluss das geschlossene Drainageventil 03 nicht in Richtung der Restfluidableitung 04 passieren kann, jedoch durch das geöffnete Brühkammerventil 18 in die Brühkammer gelangen kann.

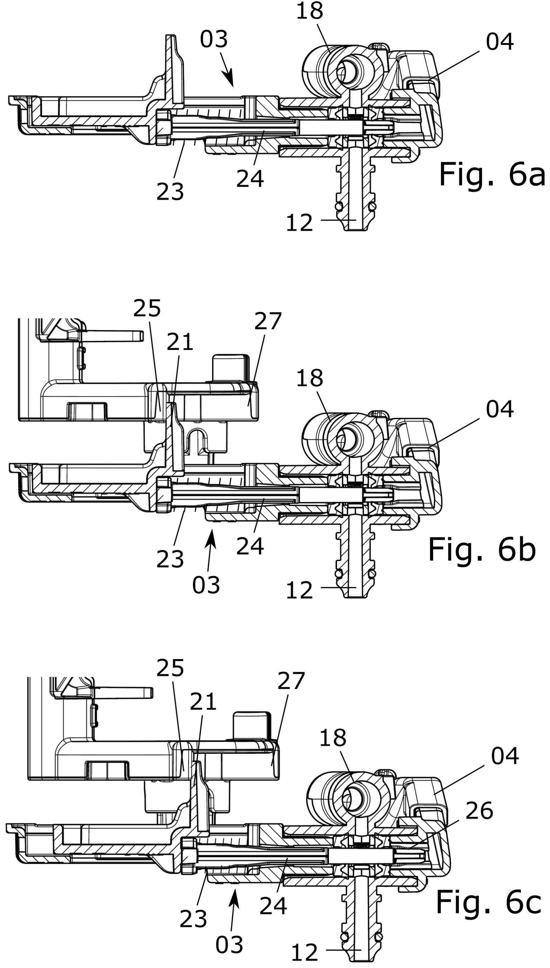

Anhand der Darstellungen der Fig. 6a bis c, die in ihrer alphabetischen Nummerierung mit den entsprechenden Zuständen der Fig. 4a bis c und 5a bis c übereinstimmen, wird die mechanische Ausbildung und Realisierung einer beispielhaften Variante des Drainageventils nochmals verdeutlicht.

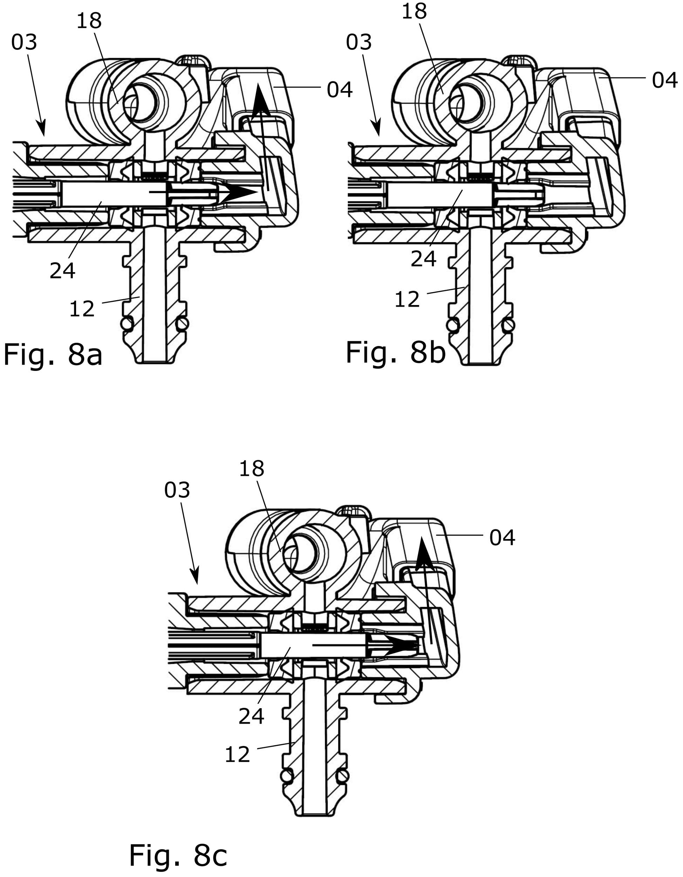

In der Fig. 6a ist ein Schnitt durch das Drainageventil gezeigt, der auch einen Schnitt durch den Fluidzufluss 12 umfasst. Das Drainageventil 03 ist als Nadelventil ausgebildet. Durch ein Federelement 23, bevorzugt eine Druckfeder wird der Ventilstößel 24 in eine normalerweise geöffnete (normally open) Ventilstellung kraftbeaufschlagt. In der geöffneten Ventilstellung, die auch in den Fig. 8a, 8b nochmals im Detail dargestellt ist, kann Fluid vom Zufluss 12 und/oder vom Brühkammerventil 18 das Drainageventil 03 in Richtung des Restfluidablaufs oder der Restfluidableitung 04 passieren. Die dem Zustand der Fig. 4a und Fig. 5a entsprechende Position des Drainageventils 03 entspricht also einer Initialposition oder Neutralposition.

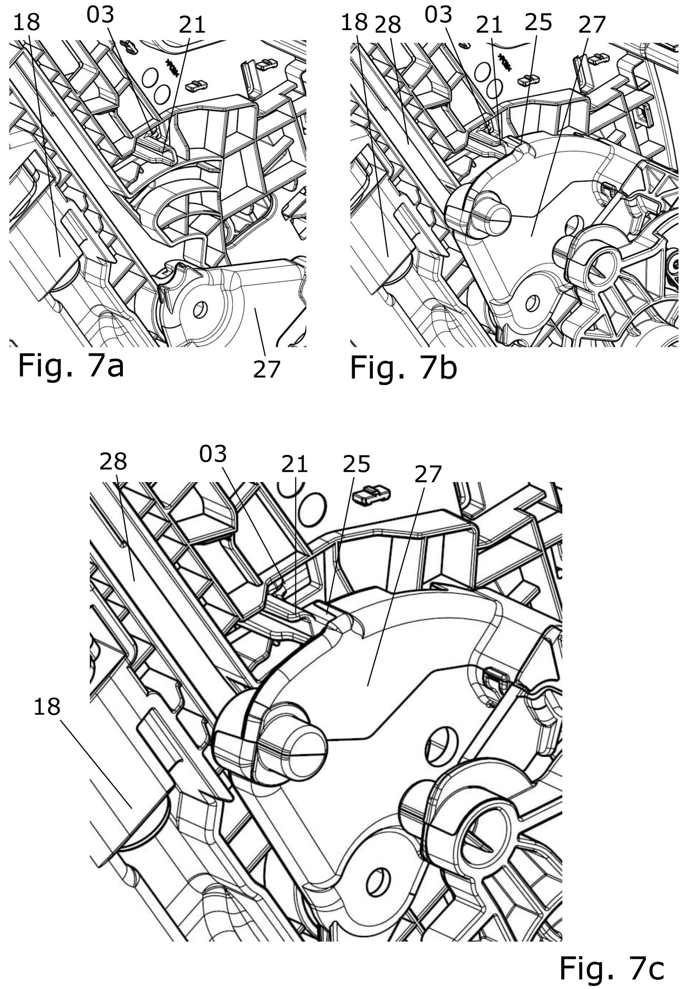

In der Darstellung der Fig. 6b ist, insbesondere in Zusammenschau mit der Fig. 7b erkennbar, dass eine Bewegung der Verstell- und Antriebseinrichtung der Brüheinheit dazu geführt hat, dass eine Schaltnocke 25 der Brüheinheit an einem Betätigungselement 21 des Drainageventils 03 zur Anlage gekommen ist. In der Position der Fig. 6b ist das Drainageventil 03 immer noch geöffnet. Wird aber die Schaltnocke 25 weiter bewegt, was durch die weitere Bewegung der Antriebs- und Verstelleinrichtung bewirkt werden kann, schiebt die Schaltnocke 25 das Betätigungselement 21 gegen die Vorspannung der des Federelements 23 auf das Brühkammerventil 18 und/oder den Zufluss 12 zu. Eine solche Situation, bei der die Verschiebung des Betätigungselements 21 aufgrund der Schaltnocke 25 weiter fortgeschritten ist, ist in der Fig. 6c dargestellt. In der Fig. 6c ist erkennbar, dass bei dem geschlossenen Drainageventil 03 zwar noch Fluid vom Zufluss 12 in Richtung des Brühkammerventils 18 passieren kann, der Ventilstößel 24 ist aber soweit auf den Ventilsitz 26 zubewegt worden, dass eine Fluidverbindung mit der ununterbrochen fluidleitend verbundenen Restfluidableitung 04 nicht möglich ist.

Die Fig. 7a bis 7c zeigen in Seitenansichten das Zusammenwirken der Schaltnocke 25, des Betätigungselements 21 und einer Grundplatte 27 einer Antriebs- und Verstelleinrichtung der Brüheinheit bei der Verstellung eines beweglichen Brühkammerteils. Die Fig. 7a entspricht dabei dem Zustand der Fig. 4a, 5a und 6a. Gleiches gilt auch für die Fig. 7b und die Fig. 7c. Das Betätigungselement 21 des Drainageventils 03 reicht dabei durch eine Ausnehmung in das Innere des Gehäuses der Brüheinheit hinein, um dort je nach Position der Brühkammer und/oder der Antriebs- und Verstelleinrichtung über die Schaltnocke 25 an der Grundplatte 27 der Verstell- und Antriebseinrichtung betätigt zu werden. Dementsprechend ist in den Fig. 7a bis 7c auch eine Seitenwand 28 eines Gehäuses der Brüheinheit erkennbar. Durch diese Seitenwand ragt das Betätigungselement 21. Auch das Drainageventil 18 erstreckt sich durch eine Öffnung im Gehäuse ins Innere der Brüheinheit hinein.

Die Fig. 8a bis 8c zeigen nochmals einen vergrößerten Ausschnitt des Drainageventils 03 in den unterschiedlichen Stellungen und zeigen somit vergrößerte Ausschnitte aus den Fig. 6a bis 6c.

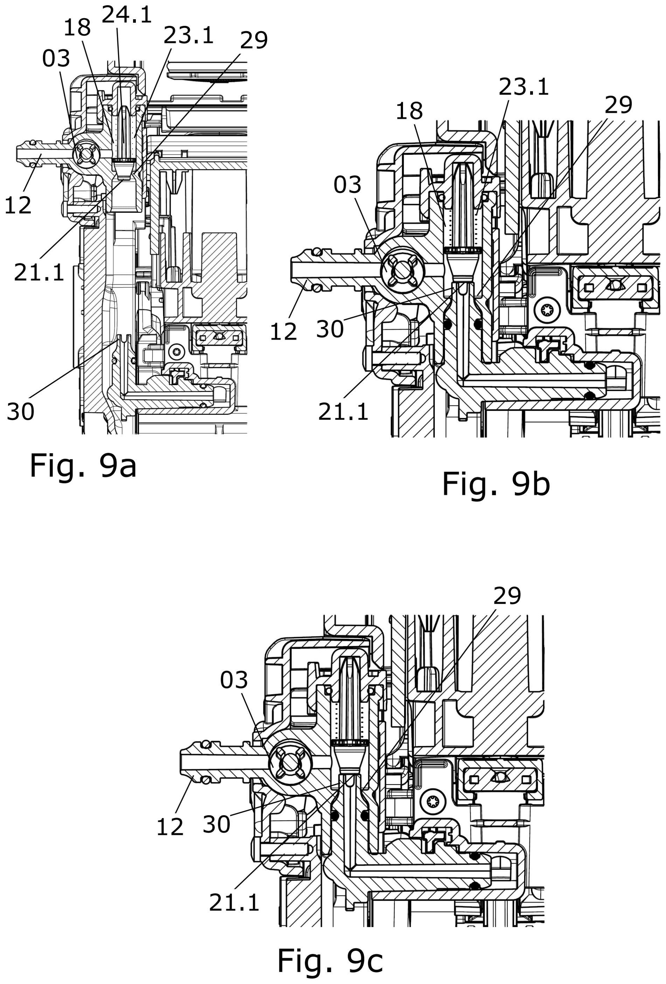

Die Fig. 9a bis c zeigen Schnitte durch das Brühkammerventil 18. In der Fig. 9a ist das ebenfalls dargestellte Drainageventil 03, von dem nur die Spitze des Ventilstößels 24.1 und ein ausgangsseitiger Teil des Ventilsitzes dargestellt ist, geöffnet und das normalerweise geschlossene Brühkammerventil 18 ist geschlossen. Die normalerweise geschlossene Stellung des Brühkammerventils 18 wird ebenfalls durch ein Federelement 23.1 erreicht, die den Ventilstößel 24.1 auf einen Ventilsitz 29 kraftbeaufschlagt. Das Ende 24.2 des Ventilstößels 24.1 dient im Fall des Brühkammerventils 18 auch als Betätigungselement 21.1. Bei einer Verstellung der Brühkammer über die Antriebs- und Verstelleinrichtung kommt es je nach Bewegungszustand oder Position der Antriebs- und Verstelleinrichtung und damit in Abhängigkeit von der Position eines beweglichen Brühkammerteils zu einer mechanischen Kopplung zwischen dem Ventilstößel 24.1 und einem Fluidanschluss 30. Dieser Fluidanschuss 30 kann, wie in den Fig. 9b und 9c gezeigt, den Ventilstößel 24.1 gegen die Vorspannung des Federelements 23.1 vom Ventilsitz 29 abheben und somit einen Fluidfluss durch das Brühkammerventil 18 ermöglichen. In der Darstellung der Fig. 9b ist anhand der Pfeildarstellung erkennbar, dass es sich erneut um die Drainageposition der Ventile handelt und somit Drainagefluid oder Restfluid aus der Brühkammer durch den Fluidanschluss 30 über das Brühkammerventil 18 und das Drainageventil 03 in die nicht dargestellte Restfluidableitung 04 gelangen kann. Umgekehrt ist bei einem geschlossenen Drainageventil 03 in der Darstellung der Fig. 9c ein Fluidfluss vom Fluidzufluss 12 vorbei am Drainageventil 03, über das geöffnete Brühkammerventil 18 zum Fluidanschluss 30 möglich. In dieser Brühposition kann also Brühfluid von der Fluidzuleitung oder dem Fluidzufluss 12 in die nicht im Detail dargestellte Brühkammer gelangen. Die alphabetisch nummerierten Figuren 9a - 9c entsprechen den jeweils mit dem gleichen Buchstaben versehenen Zuständen der Fig. 4 bis 8.

In den Fig. 9a bis 9c ist erkennbar, dass zwar einerseits ein Fluidaustritt aus dem Fluidanschluss 30 unkontrolliert erfolgen kann, solange noch keine Verbindung zum Brühkammerventil 18 hergestellt ist. Der wesentliche Vorteil gegenüber dem Stand der Technik besteht aber darin, dass das Fluid oder Restwasser nach dem Austritt aus dem Fluidanschluss 30 im unverbundenen oder ungekoppelten Zustand kontrolliert in einem vorgegebenen Raum, nämlich innerhalb der Brüheinheit 02 geführt und abgeleitet werden kann, bevorzugt zur Fluidauffangvorrichtung der Vorrichtung und nicht unkontrolliert in einen Zwischenraum zwischen Brüheinheit und Getränkezubereitungsvorrichtung gelangt. Außerdem können Verschmutzungen durch das Restwasser, welches in ungekoppelten Zuständen des Fluidanschlusses 30 grundsätzlich unkontrolliert aus dem Fluidanschluss 30 austreten kann, besser behoben oder bereinigt werden, da die Brüheinheit 02 insgesamt entnehmbar in der Vorrichtung gelagert oder angeordnet ist.

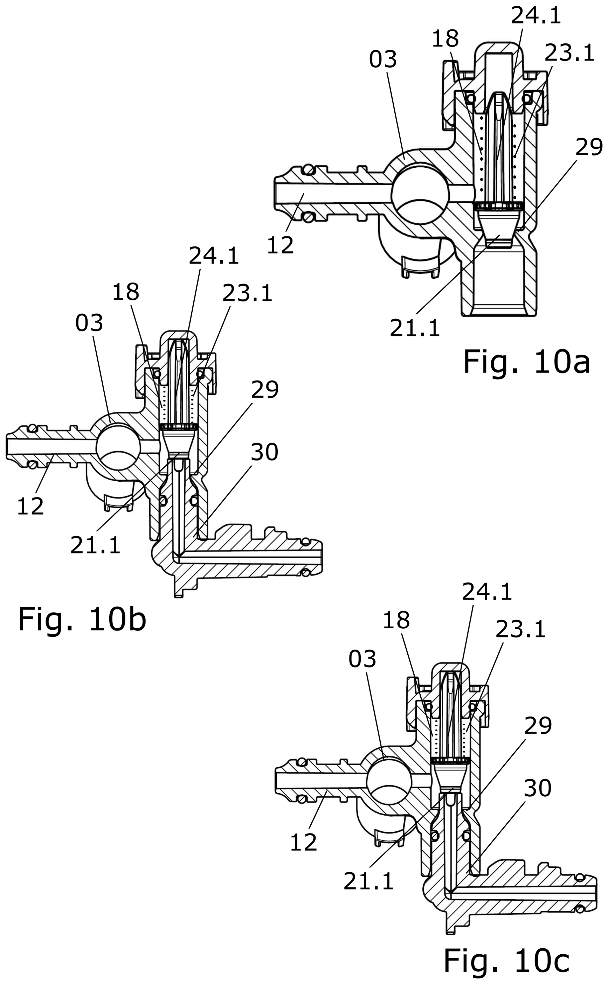

In den Fig. 10a bis 10c, die Ausschnitte aus den Fig. 9a bis 9c entsprechen, ist nochmals in einer Vergrößerung die Ausbildung des Brühkammerventils als Nadel oder Stößelventil in einem normalerweise geschlossenen Zustand sowie die Öffnung des Brühkammerventils 18 über das Betätigungselement 21.1 an der Endseite des Ventilstößels 24.1 über den Fluidanschluss 30 dargestellt, der den Ventilstößel 24.1 gegen die Vorspannungskraft der Federelement 23.1 vom Ventilsitz 29 abhebt.

### Bezugszeichen

- 01: Getränkezubereitungsvorrichtung
- 02: Brüheinheit
- 03: Drainageventil
- 04: Restfluidableitung
- 05: Brühkammer
- 06: Brühkammerteil
- 07: Brühkammerteil
- 08: Brühkopf,
- 09: Pfeildarstellung
- 10: Brühraum
- 11: Gehäuse
- 12: Fluidzufluss
- 13: Fluidauslass
- 14: Kupplung
- 15: Ende
- 16: Drainage- und Zuflussbaugruppe
- 17: Drainagebaugruppe
- 18: Brühkammerventil
- 19: Ausgang
- 20: Fluidauffangvorrichtung
- 21: Betätigungselemente
- 21.1: Betätigungselement
- 22: Fluidpumpe
- 23: Federelement
- 23.1: Federelement
- 24: Ventilstößel
- 24.1: Ventilstößel
- 24.2: Ende des Ventilstößels
- 25: Schaltnocke
- 26: Ventilsitz
- 27: Grundplatte
- 28: Seitenwand
- 29: Ventilsitz
- 30: Fluidanschluss
- 31: Abdeckung
- 32: Rastmittel

## Patentansprüche

1. Verfahren zum Betrieb einer Getränkezubereitungsvorrichtung (01), bevorzugt eines Kaffee- und/oder Espressovollautomaten, mit einem Gehäuse, in dem eine, bevorzugt entnehmbare, Brüheinheit (02) zum Aufbrühen eines Getränkesubstrats, bevorzugt Kaffeebohnenmehl, angeordnet ist, wobei ferner in dem Gehäuse eine Antriebseinrichtung angeordnet ist, die eine Brühkammer (05) der Brüheinheit (02) in unterschiedliche Relativpositionen überführt, wobei in dem Gehäuse zudem eine Fluidpumpe (22) vorgesehen ist, mit der Fluid in einem Fluidsystem der Getränkezubereitungsvorrichtung (01) förderbar ist, wobei die Brüheinheit (02) ferner eine, bevorzugt lösbare mechanische, Kupplung (14) aufweist, um eine Antriebsenergie von einem Antrieb der Getränkezubereitungsvorrichtung (01) auf die Antriebseinrichtung zu übertragen, wobei das Fluidsystem mehrere Fluidpfade ausbildet, zumindest um Fluid als Brühfluid in die Brühkammer (05) zu fördern, um aufgebrühtes Getränk von der Brüheinheit (02) an die Getränkezubereitungsvorrichtung (01) zu übertragen und/oder um Fluid als Restfluid oder Spülfluid in eine Fluidauffangvorrichtung (20) der Getränkezubereitungsvorrichtung (01) zu übertragen,
mit den nachfolgenden Verfahrensschritten:
- Initiieren eines Brühprozesses einschließlich Befüllen der Brühkammer (05) mit Getränkesubstrat in einer geöffneten Position der Brühkammer;
- Aktivieren des Antriebs und Verfahren der Brühkammer (05) in eine geschlossene Position mittels der Antriebseinrichtung;
- Fördern von Brühfluid mittels der Fluidpumpe in die in der geschlossenen Position befindliche Brühkammer (05);
- Übertragen von aufgebrühtem Getränk von der Brüheinheit (02) an die Getränkezubereitungsvorrichtung (01) und Leitung zu einem Getränkeauslauf,
**dadurch gekennzeichnet,**
**dass** vor dem Einleiten von Fluid als Brühfluid in die Brühkammer (05) ein offenes Drainageventil (03) des Fluidsystems eine fluidleitende Verbindung zwischen der Fluidpumpe (22) und der Fluidauffangvorrichtung (20) der Getränkezubereitungsvorrichtung (01) herstellt und die Fluidpumpe (22) aktiviert wird, um Fluid in die Fluidauffangvorrichtung (20) der Getränkezubereitungsvorrichtung (01) zu fördern.

2. Verfahren nach Anspruch 1,
**dadurch gekennzeichnet,**
**dass** das Drainageventil (03) so lange geöffnet bleibt und die Fluidpumpe (22) vor dem Einleiten von Fluid als Brühfluid in die Brühkammer (05) so lange aktiviert bleibt, dass zumindest ein Volumen in die Fluidauffangvorrichtung (20) gefördert wird, welches einem Leitungsvolumen des Fluidsystems zwischen einer Heizeinrichtung und dem Drainageventil (03) entspricht.

3. Verfahren nach Anspruch 1 oder 2,
**dadurch gekennzeichnet,**
**dass** vor dem Einleiten von Fluid als Brühfluid in die Brühkammer (05) ein Fluidvolumen zwischen 5ml und 20ml in die Fluidauffangvorrichtung (20) gefördert wird.

4. Verfahren nach einem der vorangehenden Ansprüche,
**dadurch gekennzeichnet,**
**dass** bei geöffnetem Drainageventil (03) die Fluidpumpe aktiviert wird, während die Brühkammer (05) in die geschlossene Position überführt wird und/oder während das Getränkesubstrat in der in der geschlossenen Position befindlichen Brühkammer (05) verdichtet wird.

5. Verfahren nach einem der vorangehenden Ansprüche,
**dadurch gekennzeichnet,**
**dass** alle Verfahrensschritte nach dem Initiieren des Brühvorgangs automatisch ablaufen und insbesondere keine zusätzliche Benutzerinteraktion stattfindet.

6. Verfahren nach einem der vorangehenden Ansprüche,
**dadurch gekennzeichnet,**
**dass** das Drainageventil (03) ohne äußere Einflüsse in einer Öffnungsstellung verharrt und nur durch eine äußere Kraftbeaufschlagung, bevorzugt über eine Bewegung der Verstelleinrichtung in eine Verschlussstellung überführt wird.

7. Verfahren nach einem der vorangehenden Ansprüche,
**dadurch gekennzeichnet,**
**dass** bei geöffnetem Drainageventil (03) gleichzeitig auch ein Fluidpfad zwischen Drainageventil (03) und Brühkammer (05) besteht und die Aktivierung der Fluidpumpe dennoch eine Förderung von Fluid in die Fluidauffangvorrichtung (20) der Getränkezubereitungsvorrichtung (01) bewirkt.

8. Verfahren nach einem der vorangehenden Ansprüche,
**dadurch gekennzeichnet,**
**dass** nach dem Übertragen von aufgebrühtem Getränk von der Brüheinheit (02) an die Getränkezubereitungsvorrichtung (01) und Leitung zu einem Getränkeauslauf das Drainageventil (03) erneut in die Öffnungsstellung überführt wird und eine fluidleitende Verbindung mit der Brühkammer (05) hergestellt wird, sodass in der Brühkammer (05) befindliches Restfluid in die Fluidauffangvorrichtung (20) der Getränkezubereitungsvorrichtung (01) abfließt oder gefördert wird.

9. Verfahren nach einem der vorangehenden Ansprüche,
**dadurch gekennzeichnet,**
**dass** zum Fördern von Brühfluid mittels der Fluidpumpe (22) in die in der geschlossenen Position befindliche Brühkammer (05) das Drainageventil (03) in eine Verschlussstellung überführt wird.
